# EUROPEAN PATENT APPLICATION

(11) **EP 3 447 216 A1**
(43) Date of publication of application: **27.02.2019**
(21) Application number: 17786027.7
(22) Date of filing: 20.04.2017
(51) Int. Cl.: E05B 49/00, B60R 25/24, B60R 25/40, H04W 4/04, H04W 12/08, H04W 64/00

(54) **KEY SECURITY DEVICE**

(30) Priority: 21.04.2016 JP 2016085254
(71) Applicant: Kabushiki Kaisha Tokai Rika Denki Seisakusho, Ohguchi-cho Niwa-gun Aichi 480-0195 (JP)
(72) Inventor: YOSHIKAWA, Sho, Niwa-gun, Aichi 480-0195 (JP); SENZAKI, Daisuke, Niwa-gun, Aichi 480-0195 (JP); KAWAMURA, Masayuki, Niwa-gun, Aichi 480-0195 (JP); KOJIMA, Hiroaki, Niwa-gun, Aichi 480-0195 (JP)
(74) Representative: TBK
(86) International application number: PCT/JP2017/015878
(87) International publication number: WO 2017/183690

(57) **Abstract**

This key security device (20) is used together with a first terminal (23) which may be a mobile phone with high functionality and a second terminal (22) which may be an electronic key. The key security device (20) is provided with: a location information acquiring unit (30) which acquires location information (Dp) about the first terminal (23) from a global positioning system (GPS) receiver (25) of the first terminal (23); a level setting unit (31) which sets an alert level according to the acquired location information (Dp); and a security guard processing unit (32) which sets a location determination parameter value according to the alert level, monitors the distance (Lk) between the first terminal (23) and the second terminal (22) through communication between the first terminal (23) and the second terminal (22) according to the alert level and the location determination parameter, and executes a security guard processing of the second terminal (22) according to the result of the monitoring.

## Description

### TECHNICAL FIELD

The present invention relates to a key security device.

A vehicle electronic key system includes an on-board controller, which is installed in a vehicle, and an electronic key, which is a portable device. The electronic key system is configured to permit or prohibit a predetermined operation performed on the vehicle through wireless communication established between the electronic key and the on-board controller. There are several vehicle electronic key systems that execute smart verification initiated by the on-board controller. In smart verification, in response to a wireless signal from the on-board controller, the electronic key returns an electronic key ID, and the on-board controller verifies the electronic key ID (refer to patent document 1 and the like). Such type of an electronic key system permits or performs locking and unlocking of a vehicle door if ID verification (vehicle exterior smart verification) is accomplished between the on-board controller and the electronic key that is located outside the vehicle. A state transition operation performed on a vehicle power supply (starting of engine) is permitted if ID verification (vehicle interior smart verification) is accomplished between the on-board controller and the electronic key that is located inside the vehicle.
Patent Document 1: Japanese Laid-Open Patent Publication No. 2005-262915

### SUMMARY

There may be cases in which the electronic key is misplaced in the vehicle. In this case, if vehicle interior smart verification is established, the vehicle may be operated in an unauthorized manner. A similar situation would occur if the electronic key is misplaced in a vehicle exterior smart verification area. If an electronic key system were to be configured to constantly monitor communication between the electronic key and the on-board controller so that the electronic key is not misplaced, this would increase the number of times the electronic key performs communications. Thus, the electronic key would consume more power and, for example, the battery of the electronic key may have to be replaced earlier.

It is an object of the present invention to provide a key security device that reduces power consumption while providing security.

One aspect of the present invention is a key security device used with a first terminal and a second terminal that communicates with the first terminal. The key security device is configured to prevent or limit unauthorized use of the second terminal in a case in which the first terminal is carried by the user and the second terminal is misplaced. The key security device includes a position information acquisition unit that acquires position information through a position detection function provided in one of the first terminal and the second terminal, a level setting unit that sets an alert level in accordance with the position information, and a security guard processor that sets a value of a position determination parameter in accordance with the alert level, monitors a distance between the first terminal and the second terminal through communication with the first terminal and the second terminal in accordance with the alert level and the position determination parameter, and prevents or limits unauthorized use of the second terminal in accordance with the monitoring result.

With this configuration, the security guard processor performs a security guard process that prevents or limits unauthorized use of the second terminal in accordance with the monitoring result of the distance between the first terminal and the second terminal. This prevents or reduces unauthorized use of the second terminal. Further, the position information acquisition unit acquires the position of the one of the first terminal and the second terminal including the position detection function. The level setting unit sets the alert level in accordance with the position of the terminal. For example, when the alert lever is low, the security guard processor decreases the distance monitoring frequency performed through communication between the first terminal and the second terminal and/or the detection frequency of the position of the second terminal. In this manner, the security guard processor monitors the position of the second terminal in accordance with the alert level set by the level setting unit to reduce power consumption while preventing or limiting unauthorized use of the second terminal when misplaced.

In several implementations, the position acquisition unit acquires the position information that is obtained by a GPS receiver arranged in the first terminal or the second terminal. This configuration allows the position information to be acquired using the GPS receiver arranged in the first terminal or the second terminal.

In several implementations, the level setting unit is configured to store a plurality of geographical locations and user familiarities respectively associated with the geographical locations, and the level setting unit determines the one of the geographical locations at where the terminal including the position detection function is located and sets the alert level in accordance with the user familiarity associated with the determined geographical location at where the terminal including the position detection function is located. With this configuration, the level setting unit can set the alert level in accordance with the user familiarity of the location where the terminal is located. This is advantageous for setting the alert level. For example, the alert level may be set to be lower as the user familiarity of the terminal position increases.

In several implementations, the position determination parameter is used for communication between the first terminal and the second terminal and is related to measurement of a received signal strength indicator of a radio wave received by one of the first terminal and the second terminal. With this configuration, the positional relationship of the first terminal and the second terminal may be estimated by measuring the received signal strength intensity.

In several implementations, the security guard process includes restricting a usable function of the second terminal. With this configuration, the usable functions of the second terminal can be restricted in accordance with the distance between the first terminal and the second terminal. For example, as the first terminal and the second terminal become farther, the usable functions of the second terminal can be decreased to, for example, forcibly deactivate some functions. Thus, unauthorized use of the second terminal is prevented or limited.

In several implementations, the security guard process includes issuing a notification prompting a user to check where the second terminal is located. With this configuration, when the second terminal is separated from the first terminal by, for example, a distance reference value or greater, a notification is issued to prompt the user to check where the second terminal is located. This allows the user to acknowledge that the second terminal is not at hand.

Several embodiments of the present invention provide a key security device that reduces power consumption while improving security. The invention, together with objects and advantages thereof, may best be understood by reference to the following description of the presently preferred embodiments together with the accompanying drawings.

### BRIEF DESCRIPTION OF THE DRAWINGS

Fig. 1 is a block diagram of one embodiment of a key security device.
Fig. 2 is a schematic diagram illustrating the operation of the key security device.
Fig. 3 is a schematic diagram of a map indicating the relationship of alert levels and monitoring parameters.
Fig. 4 is a chart illustrating and example of a position determination parameter.
Fig. 5 is a chart illustrating an example of the operation of a security guard processor.

### EMBODIMENTS OF THE INVENTION

One embodiment of a key security device will now be described.

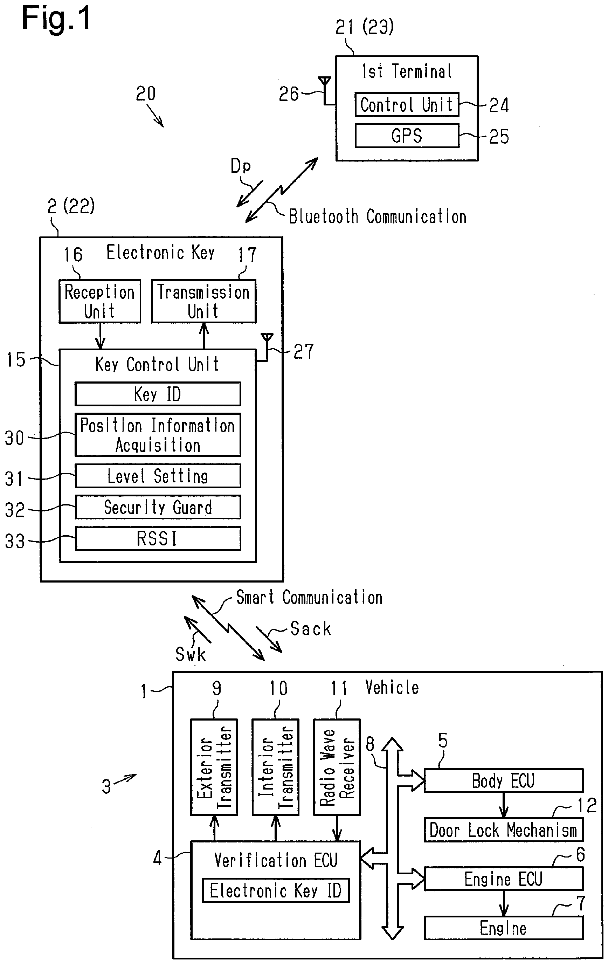

As shown in Fig. 1, an electronic key system 3 includes a verification ECU 4, which is installed in a vehicle 1, and an electronic key 2. The electronic key system 3 is configured to perform ID verification through wireless communication between the vehicle 1 and the electronic key 2. An electronic key ID is held in the electronic key 2. The wireless communication performed between the vehicle 1 and the electronic key 2 is, for example, short range communication. The electronic key system 3 may be a key-operation-free system. Generally, ID verification performed by a key-operation-free system is referred to as "smart verification" and communication for smart communication is referred to as "smart communication."

The vehicle 1 includes the verification ECU 4, a body ECU 5 that manages on-board electric devices, and an engine ECU 6 that manages the engine 7. The ECUs 4, 5, and 6 are connected to one another through an in-vehicle communication line 8 and form, for example, a Controller Area Network (CAN) or a Local Interconnect Network (LIN). The verification ECU 4 includes a memory (not shown) storing an electronic key ID of the electronic key 2 registered to the vehicle 1. The vehicle 1 includes an exterior transmitter 9 that transmits radio waves out of the passenger compartment, an interior transmitter 10 that transmits radio waves into the passenger compartment, and a radio wave receiver 11. The exterior transmitter 9 and the interior transmitter 10 transmit low frequency (LF) radio waves. The radio wave receiver 11 receives, for example, ultra-high frequency (UHF) radio waves. More specifically, in the present embodiment, the electronic key system 3 is configured to perform bi-directional communication in the LF band and the UHF band. The body ECU 5 controls a door lock mechanism 12 to lock and unlock a vehicle door.

The electronic key 2 includes a control unit 15 that controls the operation of the electronic key 2, a reception unit 16 that receives radio waves from outside the electronic key 2, and a transmission unit 17 that transmits radio waves out of the electronic key 2. The electronic key ID of the electronic key 2 is stored in the control unit 15, for example, in a memory. The reception unit 16 is configured to receive, for example, LF radio waves. The transmission unit 17 is configured to transmit, for example, UHF radio waves.

The exterior transmitter 9 periodically transmits a wake signal Swk on LF radio waves. When the electronic key 2 receives the wake signal Swk inside a communication area of the exterior transmitter 9, the electronic key 2 is activated to transmit an acknowledgement (ACK) signal Sack. Subsequent to the transmission of the wake signal Swk, when the vehicle 1 receives the ACK signal Sack from the electronic key 2, the vehicle 1 establishes communication with the electronic key 2 (exterior smart communication). This initiates smart verification (exterior smart verification). The smart verification includes vehicle code verification that authenticates a vehicle code unique to the vehicle 1, challenge-response authentication that uses an encryption key, and electronic key ID verification that authenticates the electronic key ID. The verification ECU 4 performs radio wave communication with the electronic key 2 that is located outside the vehicle. When the verifications and authentications described above are all accomplished, the verification ECU 4 permits or performs locking or unlocking of the vehicle door.

When the electronic key 2 enters the communication area of the interior transmitter 10 thereby establishing communication between the verification ECU 4 and the electronic key 2 (interior smart communication), the verification ECU 4 executes smart verification (interior smart verification) in the same manner as when located outside the vehicle. In the same manner as interior smart verification, the verification ECU 4 performs radio wave communication with the electronic key 2 located inside the vehicle. When the verifications and authentications described above are all accomplished, the verification ECU 4 permits state transition of the vehicle power supply (e.g., engine starting).

The electronic key system 3 is used with a first terminal 21, which may be a smartphone 23, and a second terminal 22, which is wireless-connected the first terminal 21 and which may be the electronic key 2 that directly communicates with the first terminal 21. The electronic key system 3 includes a key security device 20 configured to automatically set or dynamically change an alert level of the electronic key 2, which will be described later, in order to prevent or limit unauthorized use of the electronic key 2. An example in which the smartphone 23 is the first terminal 21 and the electronic key 2 is the second terminal 22 will now be described. The key security device 20 monitors the distance Lk between the first terminal 21 and the second terminal 22 through communication between the first terminal 21 and the second terminal 22. In accordance with the monitoring result, the key security device 20 executes a security guard process on the first terminal 21, which is held by the user, to prevent or limit unauthorized use of the second terminal 22. Further, in the present embodiment, the key security device 20 automatically sets the alert level of the second terminal 22 in accordance with the position of the user holding the first terminal 21. The key security device 20 also has the second terminal 22 execute a security guard process selected or determined in accordance with the position of the user to prevent or limit unauthorized use of the second terminal 22.

In a typical usage example of the smartphone 23, the smartphone 23 is always held by the user or located within eyeshot of the user. Movement of the smartphone 23 may be assumed to be movement of the user, and the position of the smartphone 23 may be assumed to be the position of the user. Accordingly, the first terminal 21 is preferably, for example, the smartphone 23 that is owned by the user. The first terminal 21 includes a control unit 24, which controls various operations of the first terminal 21, and a GPS receiver 25, which detects the position of the first terminal 21 with the Global Positioning System (GPS). The first terminal 21 includes a communication unit 26 configured to be wireless-connected to the electronic key 2 so as to directly communicate with the electronic key 2. The electronic key 2 includes a communication unit 27 configured to be wireless-connected to the first terminal 21 so as to directly communicate with the first terminal 21. In the illustrated example, the communication units 26 and 27 are configured so that the first terminal 21 and the electronic key 2 are connected (e.g., paired) through Bluetooth (registered trademark) for communication.

The key security device 20 includes a position information acquisition unit 30. The position information acquisition unit 30 acquires position information Dp indicating the position of a certain terminal, which is one of the first terminal 21 and the second terminal 22, obtained through a position detection function of the specific terminal. In the present embodiment, the certain terminal including the position detection function is the first terminal 21 including the GPS receiver 25, and the position information acquisition unit 30 is arranged in the control unit 15 of the second terminal 22. The position information acquisition unit 30 acquires the position information Dp, which indicates the position of the first terminal 21, from the first terminal 21 through communication (Bluetooth communication) between the first terminal 21 and the second terminal 22.

The key security device 20 includes a level setting unit 31 that sets the alert level of the second terminal 22 in accordance with the position information Dp obtained from the position information acquisition unit 30. The level setting unit 31 is arranged in the control unit 15 of the second terminal 22. The level setting unit 31 determines whether or not the first terminal 21 is located at any one of a plurality of geographical locations respectively associated with familiarity degrees. Then, the level setting unit 31 sets the alert level of the second terminal 22 in accordance with the position of the first terminal 21 that has been determined. The geographical locations associated with familiarity degrees may be, for example, geographical locations determined or assumed from the number of times the user visited that location, the frequency in which the user visits that location, the duration of stay at that location, and the like. The geographical locations may include the residence of the user, the workplace of the user, a trip destination of the user, or the like. The level setting unit 31 may automatically store and update the geographical locations. Further, the level setting unit 31 may store and update the geographical locations in accordance with user inputs fed from a user input device, which may be the first terminal 21.

The key security device 20 includes a security guard processor 32 that executes a security guard process selected or determined in accordance with the position of the second terminal 22. In the present embodiment, the security guard processor 32 is arranged in the control unit 15 of the second terminal 22. In the present embodiment, the security guard processor 32 sets the values of position determination parameters in accordance with the alert level set by the level setting unit 31. Further, the security guard processor 32 monitors the distance between the first terminal 21 and the second terminal 22 through communication between the first terminal 21 and the second terminal 22. In accordance with the monitoring result, the security guard processor 32 executes a security guard process to prevent or limit unauthorized use of the electronic key 2.

The operation and advantages of the key security device 20 will now be described.

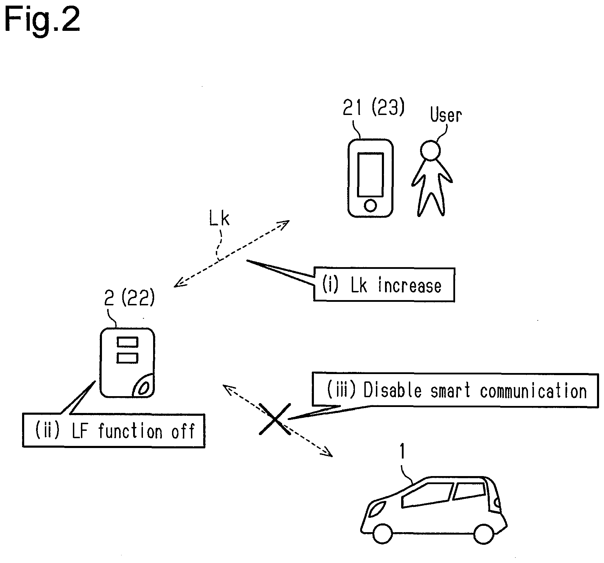

As shown in Fig. 2, the security guard processor 32 measures the distance Lk between the electronic key 2 and the smartphone 23 through communication between the electronic key 2 and the smartphone 23 to monitor the position of the electronic key 2 relative to the smartphone 23. In the present embodiment, a received signal strength indicator measurement unit 33 measures, for example, the Received Signal Strength Indicator (RSSI) of the radio waves communicated through Bluetooth, and the security guard processor 32 calculates the distance Lk between the electronic key 2 and the smartphone 23 from the measurement. A larger RSSI indicates that the electronic key 2 is closer to the smartphone 23. A smaller RSSI indicates that the electronic key 2 is farther from the smartphone 23. The security guard processor 32 may store one or more strength indicator threshold values compared with the measured received signal strength indicator to determine the distance between the electronic key 2 and the smartphone 23.

The position information acquisition unit 30 of the electronic key 2 periodically acquires the position information Dp from the smartphone 23 through Bluetooth communication. Preferably, the position information Dp is GPS information (position of smartphone 23) that can be acquired from the GPS receiver 25, which is arranged in the smartphone 23. The level setting unit 31 sets the alert level in accordance with the position information Dp acquired by the electronic key 2 from the smartphone 23.

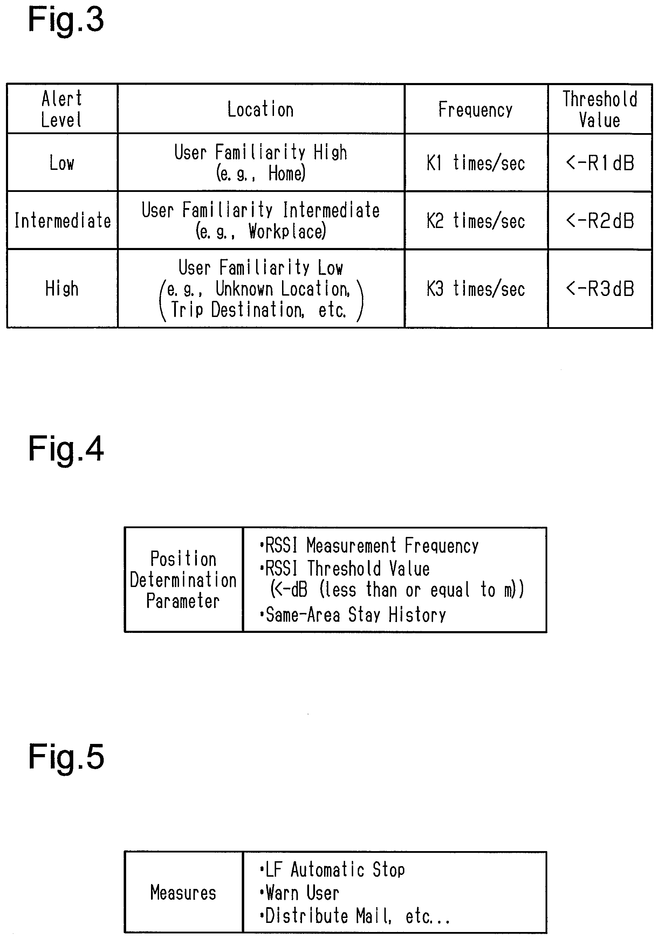

The alert level will now be described. As shown in Fig. 3, a plurality of geographical locations are determined in advance in association with user familiarities, and an alert level is set for each geographic location. For instance, the home of the user or its surrounding is an example of a geographical location having a high user familiarity. At this location, one, more, or all of the values of the number of user visits, the stay duration, and the visit frequency are high. The alert level corresponding to a geographical location having a high user familiarity is set to be, for example, the lowest. For example, the workplace of the user and its surrounding is an example of a geographical location having an intermediate user familiarity. At this location, one, more, or all of the values of the number of user visits, the stay duration, and the visit frequency are lower than those of the home of the user. The alert level corresponding to a geographical location having an intermediate user familiarity is set to be, for example, intermediate. A trip destination or unknown place is an example of a geographical location having the lowest familiarity. At this location, one, more, or all of the values of the number of user visits, the stay duration, and the visit frequency are extremely low. The alert level corresponding to a geographical location having a low user familiarity is set to be extremely high, for example, the highest.

Referring to Fig. 4, the security guard processor 32 measures the distance Lk between the electronic key 2 and the smartphone 23 in accordance with a position determination parameter corresponding to the alert level. For example, the position determination parameter is the received signal strength indicator measurement frequency, the received signal strength indicator threshold value, and/or same-area stay history. The received signal strength indicator threshold value is a threshold value used as a criterion for determining whether or not the electronic key 2 is located at a position distanced from the smartphone 23. The same-area stay history may indicate the number of times the electronic key 2 and the smartphone 23 were present in a geographical region of a predetermined area including a geographical location. The security guard processor 32 uses these position determination parameters to determine whether or not the distance Lk between the electronic key 2 and the smartphone 23 is within a maximum tolerable distance between the electronic key 2 and the smartphone 23.

As shown in Fig. 3, in the present embodiment, the position determination parameters are set to values corresponding to the alert levels. For instance, when the smartphone 23 is located at, for example, the home or its surrounding, the received signal strength indicator measurement frequency is set to K1, which may be minimum value, and the received signal strength indicator threshold value is set to R1, which may be the maximum value. More specifically, at the home or its surrounding, there is a low possibility that an unauthorized action will be performed with the second terminal 22 or through the second terminal 22. Thus, the received signal strength indicator is measured less frequently, and the alert level is lowered. Further, the received signal strength indicator threshold value is set to be high to increase the maximum tolerable distance between the electronic key 2 and the smartphone 23 so that the security guard process is seldom executed. In this manner, when the smartphone 23 is at a location where the user familiarity is high, priority is given to power consumption reduction of the electronic key 2 and the smartphone 23.

When the smartphone 23 is located at, for example, the workplace or its surrounding, the received signal strength indicator measurement frequency is set to K2, which is greater than K1, and the received signal strength indicator threshold value is set to R2, which is lower than R1. More specifically, at the workplace and its surrounding, there is a higher possibility than the home that an unauthorized action will be performed with the second terminal 22 or through the second terminal 22. Thus, when the second terminal 22 is located at the workplace or its surrounding, the received signal strength indicator measurement frequency is increased for a certain extent, and the position of the electronic key 2 is monitored more often. Further, the received signal strength indicator threshold value is lowered so that the maximum tolerable distance between the electronic key 2 and the smartphone 23 is smaller than that of the home. This improves security by monitoring the position of the electronic key 2 while reducing power consumption of the electronic key 2 and the smartphone 23.

When the smartphone 23 is at, for example, a geographical location where the user familiarity is low, the received signal strength indicator measurement frequency is set to K3, which is greater than K2, and the received signal strength indicator threshold value is set to R3, which is lower than R2. More specifically, at a geographical location where the user familiarity is low such as an unknown location, there is a high possibility or indefinite possibility that an unauthorized action will be performed with the second terminal 22 or through the second terminal 22. Thus, the received signal strength indicator is measured as frequent as possible to further monitor the position of the electronic key 2 more often. Further, the received signal strength threshold value is drastically decreased and set to, for example, the minimum value to drastically decrease the maximum tolerable distance between the electronic key 2 and the smartphone 23. In this manner, when the smartphone 23 is at a location where the user familiarity is low, priority is given to security by monitoring the position the electronic key 2 rather than to power consumption reduction of the electronic key 2 and the smartphone 23.

As shown in Fig. 5, the security guard processor 32 monitors the position of the electronic key 2 relative to the smartphone 23 and executes a security guard process in accordance with the monitoring result to prevent or limit unauthorized use of the electronic key 2. Preferably, when the electronic key 2 is misplaced in the passenger compartment, the security guard process restricts functions that are usable by the electronic key 2. For example, LF communication may be automatically stopped. Automatic stopping of the LF communication is a process that disables reception of the LF radio waves with the electronic key 2. For example, the reception unit 16 of the electronic key 2 may be deactivated, or the supply of power to the reception unit 16 may be stopped.

The security guard process may include, for example, the issuance of a notification prompting the user to check where the electronic key 2 is located. The notification may be, for example, a warning issued to the user, a mail distributed to the user, or the like. The warning to the user may be, for example, an acoustic warning produced by the horn of the vehicle 1 or by the buzzer of the smartphone 23 and/or a visual warning produced by flashing an optical indicator arranged on the smartphone 23 and/or the electronic key 2. The distribution of a mail is, for example, a process for sending a mail, which may be a text message, to the smartphone 23 to prompt the user to check where the electronic key 2 is located.

The electronic key 2 monitors the distance Lk between the electronic key 2 and the smartphone 23 and performs the security guard process when the distance Lk is far, for example, when the distance Lk exceeds the maximum tolerable distance that differs in accordance with the position of the smartphone 23. This obviates problems that may occur because of unauthorized use of the electronic key 2. Further, the electronic key 2 checks where the smartphone 23 is located and sets the alert level in accordance with the position of the smartphone 23 when monitoring the position of the electronic key 2. In this manner, in the present embodiment, RSSI measurement, which increases the power consumption of the electronic key 2 and the smartphone 23, is not frequently measured. The position of the electronic key 2 is monitored at the alert level corresponding to the position of the smartphone 23. Thus, unauthorized use of the misplaced electronic key 2 can be prevented or limited while reducing power consumption of the electronic key 2.

The position information acquisition unit 30 acquires the position information Dp obtained with the GPS function (GPS receiver 25) of the smartphone 23. Thus, the electronic key 2 uses the GPS function of the smartphone 23 to acquire the position information Dp.

The level setting unit 31 determines from the position information Dp whether the smartphone 23 is at any of a plurality of geographical locations each associated with a user familiarity and sets the alert level in accordance with the determined position of the smartphone 23. Thus, the alert level of the electronic key 2 is optimized in accordance with the position of the smartphone 23.

The position determination parameters are related to the received signal strength indicator of the radio waves used for communication by the electronic key 2 and the smartphone 23. The positional relationship of the electronic key 2 and the smartphone 23 is determined through the simple measurement of the received signal strength indicator.

When the distance Lk between the electronic key 2 and the smartphone 23 is far, the security guard process performed by the security guard processor 32 restricts the usable functions of the electronic key 2. The function restriction is effective for preventing or limiting unauthorized use of the electronic key 2.

The security guard process performed when the distance Lk between the electronic key 2 and the smartphone 23 is far issues a notification prompting the user to check where the electronic key 2 is located. The notification may be a warning issued to the user, a mail distributed to the user, or the like. The notification notifies the user that the electronic key 2 is not at hand.

The embodiment does not have to be configured as described above and may be modified as described below.

The electronic key 2 and the smartphone 23 may each include a motion sensor. When determined from the outputs of the motion sensors that the electronic key 2 and the smartphone 23 are moving, it is assumed that the electronic key 2 and the smartphone 23 are both being carried by the user. In such a case, RSSI measurement is not performed. This is further advantageous for reducing power consumption of the electronic key 2 and the smartphone 23.

The level setting unit 31 may be arranged in the first terminal 21, and the first terminal 21 may transmit the alert level to the electronic key 2.

The minimum number of alert levels is two at the minimum but may be increased or decreased when appropriate.

The user may manually set the alert level (parameter setting). For example, the user may operate the first terminal 21 (smartphone 23), which serves as a user input device, to input the alert levels and/or the position determination parameters, and the first terminal 21 may transmit (Bluetooth communication) the user input to the electronic key 2.

The alert level associated with the geographical location may be, for example, automatically set from the movement history of the user (e.g., records of GPS receiver 25).

The same-area stay history may be determined through the GPS function.

The electronic key system 3 is not limited to a system that performs key authentication through smart communication and may be modified to a system that uses other standards, radio waves, and frequencies.

The electronic key system 3 is not limited to a configuration including transmitters located inside and outside a vehicle and may be applied to a configuration in which the same transmitter is used inside and outside the vehicle.

The first terminal 21 may transmit a security guard process instruction to the second terminal 22 so that the second terminal 22 executes the security guard process.

As long as the position information Dp can be used to notify the position of the first terminal 21, the position information Dp may be, for example, any type of data such as a trigger allowing positions to be distinguished.

The first terminal 21 may be any terminal manufactured to be carried by a user of a portable terminal or configured to be carried by a user. Further, the second terminal 22 may be any terminal such as a portable terminal that may be misplaced by a user.

Preferably, the position detection function is implemented by the GPS receiver 25 or by including the GPS receiver 25. However, the position detection function may be implemented by any electric or electronic circuit configured to detect the present position.

The position detection function does not have to be provided in the first terminal 21 and may be provided in the second terminal 22.

The security guard process performed in accordance with the distance Lk of the first terminal 21 and the second terminal 22 is not limited to the example of the embodiment and may be any security guard process that prevents or limits unauthorized use of the electronic key 2.

The first terminal 21 may be the electronic key 2, and the second terminal 22 may be the smartphone 23. In this case, the security guard process may be performed when the smartphone 23 is misplaced in the vehicle.

The electronic key 2 is not limited to a dedicated electronic key and may be any portable device such as a smartphone having a key function.

The key security device 20 does not have to be used with the vehicle 1 and may be applied to a device or apparatus other than the vehicle 1 such as the door of a house.

Technical concepts that can be recognized from the above embodiments and modified examples will now be described together with their advantages.

An electronic key that communicates with a terminal having a position detection function, wherein the electronic key monitors a distance between the terminal and the electronic key through communication between the electronic key and the terminal and performs a security guard process on the terminal when the distance indicates that the electronic key is in a misplaced state to prevent or limit unauthorized use of the electronic key, the electronic key including a position information acquisition unit that acquires position information of the terminal from the terminal, a level setting unit that sets a distance monitoring alert level through the communication in accordance with the position information, and a security guard processor that sets a position determination parameter to a value corresponding to the alert level when monitoring the distance based on the position determination parameter through the communication and executes the security guard process in accordance with the monitoring result. This configuration provides an electronic key that reduces power consumption while improving security.

The first terminal 21 may include one or more processors. The one or more processors may function as the control unit 24 of the first terminal 21, the GPS receiver 25, and, when necessary, the communication unit 26. In several implementations, the one or more processors of the first terminal 21 may be one or more dedicated integrated circuits (ASIC). In further several implementations, the one or more processors of the first terminal 21 may be a microcomputer including one or more processor cores and a non-transitory machine-readable medium storing commands executed by the one or more processor cores. The non-transitory machine readable medium may be a silicon memory, a non-volatile memory, a magnetic disc device including a magnetic disc, an optical disc device including an optical disc, or the like.

The second terminal 22 may include one or more processors. The one or more processors may function as the control unit 15 of the second terminal 22 and, when necessary, the communication unit 27. In several implementations, the one or more processors of the second terminal 22 may be one or more dedicated integrated circuits (ASIC). In further several implementations, the one or more processors of the second terminal 22 may be a microcomputer including one or more processor cores and a non-transitory machine-readable medium storing commands executed by the one or more processor cores.

The present disclosure encompasses the implementations described below.

Implementation 1) A security method performed by a vehicle portable electronic key (2) and a mobile phone (23), the method including acquiring a geographical location where the mobile phone (23) is presently located with at least one of a plurality of processors included in the portable electronic key (2) and the mobile phone (23), setting a maximum tolerable distance corresponding to the acquired geographical location of the mobile phone (23) with the at least one processor, determining a measurement frequency in corresponding to the acquired geographical location of the mobile phone (23) with the at least processor, measuring a distance (Lk) between the portable electronic key (2) and the mobile phone (23) by measuring a strength of a wireless signal transmitted from one of the portable electronic key (2) and the mobile phone (23) and received by the other one of the portable electronic key (2) and the mobile phone (23) at the determined measurement frequency with the at least one processor, and performing a security guard process on the portable electronic key (2) with the at least one processor in a case in which the detected distance (Lk) between the portable electronic key (2) and the mobile phone (23) exceeds the maximum tolerable distance.

Implementation 2) The method according to Implementation 1, wherein the security guard process includes restricting a usable function of the portable electronic key (2) and/or outputting an alert on the mobile phone (23).

Implementation 3) A security system including a mobile phone (23) and a vehicle portable electronic key (2) configured to be wireless-connected to the mobile phone (23) to directly communicate with the mobile phone (23), wherein the mobile phone (23) and the portable electronic key (2) are configured to perform the method according to implementation 1.

Implementation 4) The security system according to implementation 3, wherein the mobile phone (23) is a Bluetooth host device, and the portable electronic key (22) is a Bluetooth client.

Implementation 5) The security system according to implementation 3, wherein the portable electronic key (22) is configured to communicate with a vehicle (1) and unlock the vehicle (1), and the portable electronic key (22) is configured to be Bluetooth-connected and paired with the mobile phone (23).

Implementation 6) The security system according to implementation 3, wherein the security system is configured to perform a method including measuring a geographical position of the mobile phone (23) with at least one processor of the mobile phone (23), setting the maximum tolerable distance in corresponding to the measured geographical position of the mobile phone (23) with at least one processor of the mobile phone (23) and the portable electronic key (2), determining a measurement frequency corresponding to the geographical position of the mobile phone (23) with the at least one processor of the mobile phone (23) and the portable electronic key (2), measuring a received signal strength indicator of a wireless signal at the measurement frequency with the at least one processor of the mobile phone (23), and performing a security guard process on the portable electronic key (2) with at least one processor of the portable electronic key (2) in a case where the measured received signal strength indicator exceeds a received signal strength indicator threshold value corresponding to the maximum tolerable distance.

Implementation 7) The security system according to implementation 7, wherein the at least one processor of the mobile phone (23) or the portable electronic key (2) is configured to set the measurement frequency and the received signal strength indicator threshold value in accordance with the measured geographical position of the mobile phone (23) and a plurality of geographical locations respectively associated with user familiarities.

Implementation 8) A machine-readable medium storing a command configured to implement the security method according to implementation 1 when executed by a plurality of processors arranged in one or both of a portable electronic key (2) and a mobile phone (23).

It should be apparent to those skilled in the art that the present invention may be embodied in many other specific forms without departing from the scope of the invention. Therefore, the above-described examples and embodiments are to be considered as illustrative and not restrictive, and the invention is not to be limited to the details given herein, but may be modified within the scope and equivalence of the appended claims.

### DESCRIPTION OF REFERENCE CHARACTERS

1) vehicle, 2) electronic key as an example of a second terminal, 20) security device, 21) first terminal, 22) second terminal, 30) position information acquisition unit, 31) level setting unit, 32) security guard processor, 33) received signal strength indicator measurement unit, Lk) distance, Dp) position information

## Claims

1. A key security device used with a first terminal and a second terminal that communicates with the first terminal, wherein the key security device is configured to prevent or limit unauthorized use of the second terminal in a case in which the first terminal is carried by a user and the second terminal is misplaced, the key security device comprising:
a position information acquisition unit configured to acquire position information through a position detection function provided in one of the first terminal and the second terminal;
a level setting unit configured to set an alert level in accordance with the position information; and
a security guard processor configured to set a value of a position determination parameter in accordance with the alert level, monitor a distance between the first terminal and the second terminal through communication with the first terminal and the second terminal in accordance with the alert level and the position determination parameter, and performs a security guard process that prevents or limits unauthorized use of the second terminal in accordance with the monitoring result.

2. The key security device according to claim 1, wherein the position information acquisition unit is configured to acquire the position information that is obtained by a GPS receiver arranged in the first terminal or the second terminal.

3. The key security device according to claim 1 or 2, wherein
the level setting unit is configured to store a plurality of geographical locations and user familiarities respectively associated with the geographical locations, and
the level setting unit determines the one of the geographical locations at where the terminal including the position detection function is located and sets the alert level in accordance with the user familiarity associated with the determined geographical location at where the terminal including the position detection function is located.

4. The key security device according to any one of claims 1 to 3, the position determination parameter is used for communication between the first terminal and the second terminal and is related to measurement of a received signal strength indicator of a radio wave received by one of the first terminal and the second terminal.

5. The key security device according to any one of claims 1 to 4, wherein the security guard process includes restricting a usable function of the second terminal.

6. The key security device according to any one of claims 1 to 5, wherein the security guard process includes issuing a notification prompting a user to check where the second terminal is located.
